# EUROPÄISCHE PATENTSCHRIFT

(11) **EP 1 473 481 B1**
(45) Veröffentlichungstag und Bekanntmachung des Hinweises auf die Patenterteilung: **18.07.2007**
(21) Anmeldenummer: 04007759.6
(22) Anmeldetag: 31.03.2004
(51) Int. Cl.: F16D 65/092, F16D 55/226, F16D 65/097

(54) **Bremssattel für eine Scheibenbremse sowie Bremspad für eine Scheibenbremse**
Brake caliper for a disc brake and brake pad for a brake disc
Etrier de frein à disque et patin de frein pour un frein à disque

(30) Priorität: 28.04.2003 DE 10319250; 17.01.2004 DE 102004002571
(43) Veröffentlichungstag der Anmeldung: 03.11.2004
(73) Patentinhaber: BPW Bergische Achsen Kommanditgesellschaft, 51674 Wiehl (DE)
(72) Erfinder: Pfeiffer, Michael, 51674 Wiehl (DE)
(74) Vertreter: Christophersen & Partner

(56) Entgegenhaltungen:
- EP-A- 0 341 610
- EP-A- 0 628 744
- DE-A- 4 332 709
- US-A1- 2003 085 083

## Beschreibung

Die Erfindung betrifft einen Bremssattel für eine Scheibenbremse mit einem die zu beiden Seiten der Bremsscheibe der Scheibenbremse angeordneten Bremspads in Ausnehmungen aufnehmenden Bremsträger, der zur axialen Führung und/oder zur Abstützung der Bremspads in Drehrichtung mit Führungsflächen versehen ist, die sich über den Zustellweg der Bremspads erstrecken und an denen sich korrespondierende Führungsflächen der Bremspads abstützen können, wobei die Ausnehmungen des Bremsträgers einerseits und die darin angeordneten Bremspads andererseits mit Strukturen in Form zueinander korrespondierender Vorsprünge und Aussparungen versehen sind.

Bei der Reparatur und der Wartung von Kraftfahrzeugen werden Bremsbeläge (sogenannte Bremspads) häufig aufgrund engen Bauraums und mangelnder Beleuchtung unter schlechten Sichtverhältnissen eingebaut. Da Bremsen und insbesondere die Bremspads für die Sicherheit des Fahrzeuges besonders wichtige Bauteile sind, ist es sinnvoll, geeignete Vorsichtsmaßnahmen mit dem Ziel der Vermeidung von Fehlern bei der Montage der Bremspads zu treffen.

Aus der US 4,473,137 ist es bekannt, den versehentlichen Einbau fehlerhafter Bremsklötze durch eine Art Verschlüsselung sowohl der Bremsklötze wie auch der entsprechenden Aufnahmen des Bremsträgers zu vermeiden. Nachteilig ist jedoch, daß die Bremspads auch ohne Verwendung der Verschlüsselung verbaut werden können, wobei eine falsche Einbaulage sowie auch ein Verlieren nicht ausgeschlossen ist.

Mit dem Ziel der Fehlervermeidung beim Einbau von Bremspads befassen sich ferner die DE 29 19 535 A1 und die EP 0 752 541 A1. In der erstgenannten Druckschrift werden Paare von Bremspads vorgeschlagen, bei denen die Reibbeläge der Pads unterschiedlich lang sind. Demgegenüber wird in der EP 0 752 541 A1 eine asymmetrische Gestaltung beider Pads einschließlich ihrer Rückenplatten und der Führungsflächen vorgeschlagen. Diese asymmetrische Grundkonstruktion des Bremssattels kann dazu führen, daß sich die Bremse in den beiden möglichen Drehrichtungen unterschiedlich verhält. Außerdem verlangt die asymmetrische Anordnung der Führungsflächen eine Sonderkonstruktion, verbunden mit einem entsprechenden Entwicklungsaufwand bis zur Serienreife der Bremse.

Aus der EP 0 347 523 B1 ist ein Bremssattel bekannt bei welchem, damit nur die vorgesehenen Bremspads an den hierfür vorgesehenen Stellen eingebaut werden können, an den die Bremspads während der axialen Zustellbewegung führenden Führungsflächen zusätzliche Ansätze oder Ausnehmungen ausgebildet sind. Deren Konturen sind auf korrespondierende Ausnehmungen bzw. Ansätze abgestimmt, die an den Bremspads angeformt sind. Die so erreichte Verschlüsselung wird fertigungstechnisch dadurch realisiert, daß bei der ohnehin erforderlichen Bearbeitung der Führungsflächen zugleich auch die Ausformung der Verschlüsselungsstrukturen erfolgt. Mit dieser gegenseitigen Verschlüsselung der Bremspads und der Bremsträger wird zwar erreicht, daß sich nur die dafür vorgesehenen Bremspads in den Bremsträger einsetzen lassen. Hingegen wird nicht vermieden, daß, zwar ein richtiger Bremspad, jedoch in falscher Einbaulage montiert wird.

Angestrebt wird daher, daß bei einem Bremssattel für eine Scheibenbremse sowohl erkennbar ist, ob der jeweilige Bremspad für die Bremse bestimmt ist als auch, ob dieser in richtiger Einbaulage montiert ist. Zur Reduzierung des Entwicklungsaufwandes soll der Bremssattel im Vergleich zu einem die genannten Vorteile nicht bietenden Bremssattel dieselbe, weitgehend unabhängig von der Hauptdrehrichtung der Bremse arbeitende Grundkonstruktion aufweisen.

Demgemäß wird ein Bremssattel mit den Merkmalen des Anspruchs 1 vorgeschlagen. Hierbei sind die Führungsflächen der Bremspads, bezogen auf die Mitte der Bremspads in Drehrichtung, symmetrisch angeordnet und gestaltet, und die zueinander korrespondierenden Vorsprünge und Aussparungen befinden sich außerhalb der Führungsflächen von Bremsträger und Bremspads. Unter den Führungsflächen der Bremspads sollen hierbei jene Flächen der Bremspads verstanden werden, welche beim Bremsvorgang die Bremskräfte und -momente auf die korrespondierenden Führungsflächen des Bremsträgers abführen.

Mit einem solchen Bremssattel wird daher die herkömmliche, weitgehend unabhängig von der Drehrichtung der Bremse arbeitende Grundkonstruktion beibehalten, so daß der Entwicklungsaufwand bis zur Produktionsreife der Bremse relativ gering ist. Trotz Beibehaltung der Grundkonstruktion der Bremse läßt sich infolge der an den Ausnehmungen des Bremsträgers einerseits und an den Bremspads andererseits ausgebildeten, zueinander korrespondierenden Vorsprüngen und Aussparungen sofort beim Einsetzen der Bremspads erkennen, ob deren Montage in richtiger Einbaulage erfolgt. Bei falscher Einbaulage, z. B. einer um 180° verdrehten Einbaulage, korrespondieren die Vorsprünge und Aussparungen nicht mehr, der Bremspad läßt sich nicht oder nicht vollständig in die Ausnehmung des Bremsträgers einsetzen.

Ausgestaltungen des erfindungsgemäßen Bremssattels sind in den Unteransprüchen angegeben.

Es ist von Vorteil, wenn sich die Vorsprünge und Aussparungen im Bereich des der Drehachse der Scheibenbremse zugewandten Innenrandes des Bremspads befinden. Dort sind Bremsbeläge bereichsweise frei von Führungsflächen, so daß eine dortige Anbringung von Vorsprüngen oder Aussparungen die Wirkung und Effizienz der Führungsflächen nicht beeinträchtigt.

Die Führung der Bremspads in der Ausnehmung des Bremsträgers erfolgt ausschließlich über die bereits erwähnten Führungsflächen. Die erfindungsgemäße Aussparung sowie der erfindungsgemäße Vorsprung übernehmen keine Führungsfunktion für die Bremspads, weshalb sie vorzugsweise zueinander berührungsfrei sind. Femer wird vorgeschlagen, daß die Ausnehmungen des Bremsträgers zur Aufnahme der Bremspads an den Umriß des Bremspads angepaßt sind. Die Bremspads sitzen hierbei in Taschen des Bremsträgers, deren Umrißgestalt dem Umriß des Bremspads angepaßt ist. Dies ermöglicht eine kompakte Bauweise des Bremssattels mit zugleich hoher Festigkeit sowie einer guten Abführung der an den Bremspads wirkenden Bremsmomente auf den Bremsträger.

Fertigungstechnisch ist es von Vorteil, wenn für jeden Bremspad der Vorsprung an der entsprechenden Ausnehmung des Bremsträgers, und die Aussparung im Umriß des Bremspads angeordnet ist. Bei der Herstellung des Bremsträgers, in der Regel durch Gießen, läßt sich auf diese Weise der Vorsprung gußtechnisch sogleich mit anformen, so daß zusätzliche Fertigungsschritte nicht erforderlich sind. Auch ist es fertigungstechnisch einfacher, den Bremspad mit einer Aussparung zu versehen, als dort einen Vorsprung anzubringen.

Mit einer weiteren Ausgestaltung wird vorgeschlagen, daß der Vorsprung ein Nocken ist, der einstückig am Bremsträger angeformt in die Ausnehmung vorspringt.

Bei einer weiteren Ausgestaltung des Bremssattels ist vorgesehen, daß an der Ausnehmung des Bremsträgers ein Paar erster Führungsflächen und ein Paar zweiter Führungsflächen ausgebildet sind, wobei die ersten Führungsflächen zueinander fluchten und im wesentlichen radial nach außen weisen, und die zweiten Führungsflächen aufeinander zu gerichtet sind. Die mit solcherart ausgebildeten Führungsflächen erzielte Symmetrie hat zur Folge, daß die Bremse weitgehend unabhängig von der Drehrichtung arbeitet. Dies ermöglicht zudem eine wahlweise Montage einund desselben Bremssattels sowohl auf der linken, wie auch auf der rechten Fahrzeugseite.

Die Bremspads können jeweils mit einer Aussparung oder einem Vorsprung versehen sein, die/der sich ausschließlich über einen Teil der axialen Dicke des Bremspads erstreckt, wobei an den Ausnehmungen des Bremsträgers im Falle einer Aussparung des Bremspads ein korrespondierender Vorsprung und im Falle eines Vorsprungs der Bremspads eine korrespondierende Aussparung ausgebildet ist, welcher Vorsprung bzw. welche Aussparung sich ausschließlich über einen Teil des Zustellweges des Bremspads erstreckt. Wird der Bremspad falsch montiert, z. B. in einer um 180° verdrehten Einbaulage, korrespondieren die Positionen der Vorsprünge und Aussparungen nicht mehr, der Bremspad läßt sich gar nicht erst richtig in die Ausnehmung des Bremsträgers einsetzen. Ferner ist schnell erkennbar, ob es sich um einen für die Bremse bestimmten Bremspad handelt. Ist dies nicht der Fall, fehlt es auch hier an der erfindungsgemäßen Zuordnung zwischen einer Aussparung und einem zu der Aussparung korrespondierenden Vorsprung.

Mit einer Ausführungsform der Erfindung wird vorgeschlagen, daß die Aussparungen und Vorsprünge, bezogen auf die Drehrichtung der Scheibenbremse, in der Mitte der Bremspads und in der Mitte der Ausnehmungen angeordnet sind. Derselbe Bremspad läßt sich auf diese Weise sowohl auf der einen, wie auch auf der anderen Seite in den Bremsträger einsetzen. Hiermit einher geht eine Typenvereinfachung mit dem Vorteil größerer Stückzahlen eines einheitlichen Belagtyps, verbunden mit verbesserter Lagerhaltung und Lagerlogistik. Bei der Neubestückung der Scheibenbremse mit Bremspads ist nicht darauf zu achten, welcher der häufig paarweise verkauften Beläge auf der einen, und welcher auf der anderen Seite einzusetzen ist. Gleichwohl ist sichergestellt, daß jeder der beiden Bremspads in richtiger Einbaulage und nicht z. B. um 180° verdreht montiert wird.

Femer von Vorteil ist es, wenn sich die Aussparung an dem Bremspad befindet, und sich der Bremspad aus einem Reibbelag und einer Belagplatte zusammensetzt, wobei die Aussparung ausschließlich in der Belagplatte ausgebildet ist.

Bei einer anderen Ausführungsform sind, bezogen auf die Mitte der Bremspads in Drehrichtung, die zueinander korrespondierenden Vorsprünge und Aussparungen unsymmetrisch angeordnet. Durch diese Asymmetrie ist bereits bei dem Versuch eines Einsetzens eines Bremspads sofort erkennbar, ob dieser in seiner richtigen Einbaulage montiert wird. Bei falscher Einbaulage, z. B. einer um 180° verdrehten Einbaulage, korrespondieren die Positionen der Vorsprünge und Aussparungen nicht mehr, der Bremspad läßt sich nicht in die Ausnehmung des Bremsträgers einsetzen. Ferner ist bereits beim Ansetzen des Bremspads an die Ausnehmung des Bremsträgers erkennbar, ob es sich um einen für den jeweiligen Bremsentyp bestimmten Bremspad handelt. Ist dies nicht der Fall, fehlt es an der erfindungsgemäßen Zuordnung zwischen einer Aussparung und einem zu der Aussparung korrespondierenden Vorsprung.

Fertigungstechnisch ist es von Vorteil, wenn der erfindungsgemäße Vorsprung an der Ausnehmung des Bremsträgers, und die erfindungsgemäße Aussparung im Umriß des Bremspads angeordnet ist. Bei der Herstellung des Bremsträgers, in der Regel durch Gießen, läßt sich auf diese Weise der Vorsprung gußtechnisch sogleich mit anformen, so daß keine zusätzlichen Fertigungsschritte erforderlich sind. Auch ist es fertigungstechnisch einfacher, den Bremspad mit einer Aussparung zu versehen, als dort einen Vorsprung anzubringen. Insbesondere ist es fertigungstechnisch von Vorteil, wenn die Aussparung in dem Bremsbelag eine Nut ist. Vorzugsweise erstreckt sich diese fluchtend sowohl durch den Reibbelag des Bremspads wie auch durch dessen Belagplatte bzw. Rückenplatte hindurch.

Von zusätzlichem Vorteil ist es, wenn die unsymmetrische Anordnung der Vorsprünge bzw. Aussparungen an beiden Ausnehmungen des Bremsträgers gleich, jedoch spiegelbildlich verkehrt ist. Es läßt sich dann derselbe Bremspad sowohl auf der einen, wie auch auf der anderen Seite in den Bremssattel einsetzen. Hiermit einher geht eine Typenvereinfachung mit dem Vorteil größerer Stückzahlen eines einheitlichen Belagtyps, verbesserter Lagerhaltung und Lagerlogistik. Bei einer Neubestückung der Scheibenbremse mit Bremspads ist nicht darauf zu achten, welcher der häufig paarweise verkauften Pads auf der einen, und welcher auf der anderen Seite eingesetzt wird. Gleichwohl ist sichergestellt, daß jeder der beiden Pads in richtiger Einbaulage und nicht z. B. um 180° verdreht montiert wird.

Schließlich wird mit der Erfindung ein Bremspad vorgeschlagen, bei dessen Einsetzen in den Bremsträger sowohl erkennbar ist, ob es sich um einen für die Bremse bestimmten Bremspad handelt als auch, ob bei Verwendung eines für die Bremse bestimmten Bremspads dieser in richtiger Einbaulage montiert wird.

Zwei Ausführungsbeispiele der Erfindung werden nachfolgend anhand der Zeichnung erläutert. Darin zeigen
- Fig. 1: in perspektivischer Darstellung den Bremssattel einer Scheibenbremse, wobei aus Gründen der Übersichtlichkeit die Bremsscheibe der Scheibenbremse weggelassen wurde;
- Fig. 2: in einer ersten Ausführungsform einen Bremsträger, welcher Bestandteil des Bremssattels nach Fig. 1 sein kann, mit einem in den Bremsträger einzusetzenden Bremspad;
- Fig. 3: den Bremsträger nach Fig. 2 mit dem darin eingesetzten Bremspad;
- Fig. 4: in einer anderen Ausführungsform einen Bremsträger, welcher Bestandteil des Bremssattels nach Fig. 1 sein kann, ohne Darstellung der darin einzusetzenden Bremspads und
- Fig. 5: in einer Seitenansicht den Bremsträger nach Fig. 4 mit einem darin eingesetzten Bremspad, dessen Belag- bzw. Rückenplatte schraffiert dargestellt ist.

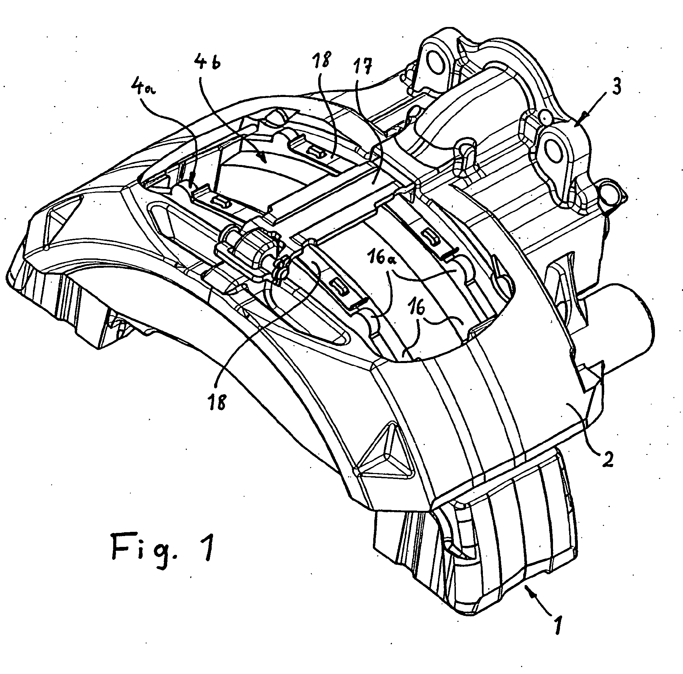

Der in Fig. 1 in einer allgemeinen Übersichtsdarstellung dargestellte Bremssattel ist ein Schwimmsattel, d. h. er ist Bestandteil einer Schwimmsattel-Scheibenbremse eines Fahrzeuges. Die Erfindung läßt sich jedoch in gleicher Weise auch bei Festsattelbremsen realisieren, wie sie ebenfalls als Fahrzeugbremsen weit verbreitet sind. Dargestellt ist eine Bremse für eine einzige Bremsscheibe. In gleicher Weise läßt sich die Erfindung auch bei Bremsen mit zwei oder mehreren Bremsscheiben realisieren.

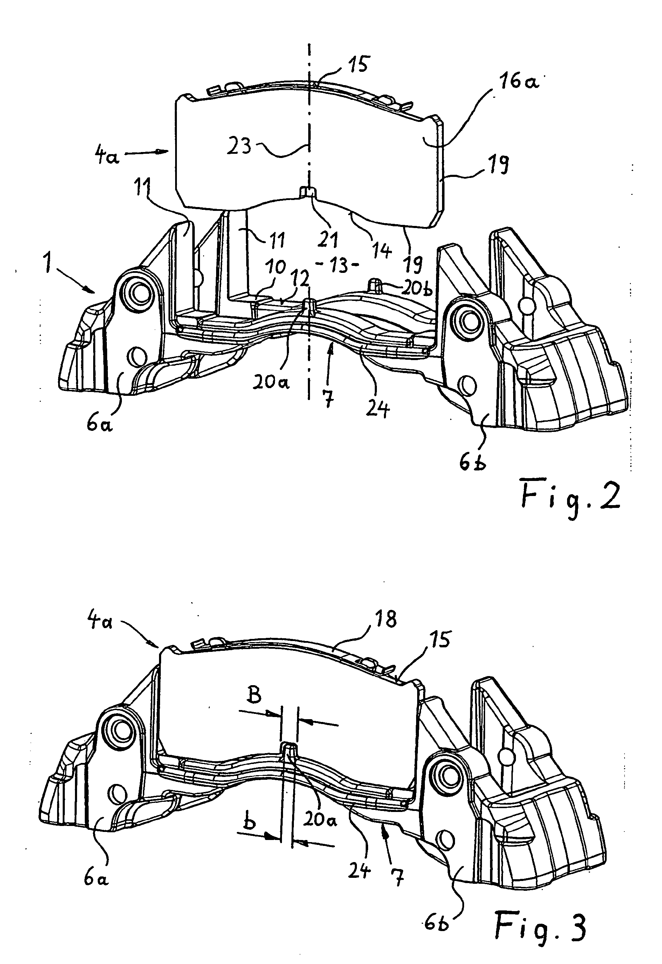

Der Bremssattel besteht aus einem Bremsträger 1, wie er in Fig. 2 als Einzelteil dargestellt ist, ferner aus einem mit dem Bremsträger 1 verbundenen Bremsgehäuse 2 sowie einer Bremszuspannung 3, welche beim Ausführungsbeispiel einteilig mit dem Bremsgehäuse 2 ausgebildet ist. In der Bremszuspannung 3 sitzt der mechanisch, hydraulisch oder pneumatisch angetriebene Mechanismus zur Erzeugung der Zuspannkraft auf die in dem Bremssattel geführten Bremspads 4a, 4b. Jeder Bremspad 4a, 4b setzt sich aus einem Reibbelag 16 und einer Belag- oder Rückenplatte 16a zusammen.

Der Bremsträger 1 dient der Aufnahme und Führung der beiden Bremspads 4a, 4b, wobei sich im Betrieb der Scheibenbremse der eine Bremspad 4a auf der einen Seite der Bremsscheibe, und der andere Bremspad 4b auf der anderen Seite der Bremsscheibe befindet. Aus Gründen der Übersicht ist in den Fign. 2 und 3, welche nur den Bremsträger 1 einer ersten Ausführungsform der Erfindung zeigen, nur einer der Bremspads dargestellt. Der Bremsträger 1 ist nach Art einer Doppelbrücke gestaltet mit zwei Endstücken 6a, 6b, welche über zwei parallel und im Abstand zueinander verlaufende Streben 7 miteinander verbunden sind. Zwischen diesen Streben 7 befindet sich im Betrieb die mit dem Fahrzeugrad umlaufende Bremsscheibe. Die Endstücke 6a, 6b und Streben 7 bilden zueinander jeweils einen rechten Winkel und bilden hierdurch eine im wesentlichen rechteckige Tasche oder Ausnehmung 13, an der sich Führungsflächen 10, 11 befinden. Es handelt sich hierbei um passgenau gearbeitete Flächen, welche z. B. durch Räumen oder durch Fräsen hergestellt werden. Zwei erste Führungsflächen 10, welche an den Enden der Streben 7 ausgebildet sind, weisen im wesentlichen radial nach außen. Sie befinden sich in einund derselben Ebene. Zweite, zu den ersten Führungsflächen 10 rechtwinklige Führungsflächen 11 befinden sich an den Endstücken 6a, 6b und weisen im wesentlichen tangential und aufeinander zu.

Durch die Führungsflächen 10, 11, jedoch auch durch die übrigen beteiligten Flächen 12 der Endstücke 6a, 6b und brückenförmigen Streben 7 des Bremsträgers 1 werden zwei Ausnehmungen 13 gebildet, in denen sich im Betrieb der Bremse die Bremspads 4a, 4b befinden. Insbesondere Fig. 2 läßt erkennen, daß die Ausnehmungen 13 in etwa rechteckig sind, weshalb auch die daran einsetzbaren Bremspads 4a, 4b eine im wesentlichen rechteckige Gestalt aufweisen, wobei sie nur entlang sowohl ihres Innenrandes 14 wie auch ihres Außenrandes 15 konkave bzw. konvexe Rundungen entsprechend der Kreisform der Bremsscheibe aufweisen.

Die Bremspads 4a, 4b sitzen nicht entlang ihres gesamten Umrisses in der jeweiligen Ausnehmung 13, sondern sie stützen sich in der Ausnehmung nur an den ersten Führungsflächen 10 und zweiten Führungsflächen 11 ab. Hierbei übernehmen die Führungsflächen 10, 11 eine doppelte Funktion. Zum einen führen sie die Bremspads in axialer Richtung, d. h. während der Zustellbewegung in Richtung auf die Bremsscheibe. Zum anderen übernehmen die Führungsflächen 10, 11 die Abstützung der Bremspads während des Bremsvorganges und damit die Ableitung der auftretenden Bremsmomente auf den Bremsträger 1. An dieser tangentialen Abstützung, d. h. in Drehrichtung, sind in erster Linie die zweiten Führungsflächen 11 beteiligt, jedoch in geringerem Maße auch die ersten, in etwa radial nach außen weisenden Führungsflächen 10. Durch die in Bezug auf die Mitte 23 symmetrische Gestaltung und Anordnung der Führungsflächen 10, 11 arbeitet die Bremse in beiden Drehrichtungen gleich.

Die axiale Erstreckung der Führungsflächen 10, 11 ist so bemessen, daß eine sichere Gleitbahn für die Bremspads sichergestellt ist, und zwar sowohl bei neuen Bremspads, wie auch bei stark verschlissenen Bremspads mit entsprechend reduziertem Reibbelag 16 und entsprechend weiter fortgeschrittener Zustellung der Belagplatte 16a.

Fig. 1 läßt erkennen, daß sich über die Außenränder 15 (Fig. 3) jedes der beiden Bremspads ein an dem Bremsgehäuse 2 lösbarer Spannbügel 17 erstreckt. Der Spannbügel 17 übt über Federelemente 18, welche auf dem Außenrand 15 der Bremspads sitzen, eine dauernde Federkraft auf die Bremspads aus welche bestrebt ist, die Bremspads nach innen in Richtung auf den Drehmittelpunkt zu beaufschlagen. Auf diese Weise liegen die Bremspads 4a, 4b, zumindest bei nicht betätigter Bremse, stets spielfrei an den zwei Führungsflächen 10 des Bremsträgers 1 an. Zur Erzielung einer möglichst geringen Reibung sind auch die Bremspads 4a, 4b dort, wo sie an den Führungsflächen 10, 11 des Bremsträgers 1 anliegen, mit entsprechend bearbeiteten Führungsflächen 19 versehen. Diese sind an der Belagplatte 16a ausgebildet, nicht am Reibbelag. Unter den Führungsflächen 19 werden daher jene Flächen oder Flächenbereiche am Umfang der Belagplatte 16a verstanden, welche beim Bremsvorgang die Bremskräfte und -momente auf die korrespondierenden Führungsflächen 10, 11 des Bremsträgers abführen.

Der Bremsträger 1 ist auf der Oberseite 12 der Streben 7 mit jeweils einem Vorsprung 20a, 20b in Gestalt eines Nockens versehen. Jeder dieser beiden Vorsprünge 20a, 20b ist einstückig an dem Bremsträger 1 angegossen. Ferner befindet sich jeder Vorsprung 20a, 20b, auf die Drechrichtung der Scheibenbremse bezogen, bei dem hier beschriebenen Ausführungsbeispiel genau in der Mitte 23 der Bremspads bzw. in der Mitte der Ausnehmungen 13. Aufgrund dieser mittigen Anordnung weist jeder Vorsprung 20a, 20b denselben Abstand zu der einen Führungsfläche 11, wie auch zu der anderen, gegenüberliegenden Führungsfläche 11 auf. Auch in Bezug auf die beiden Führungsflächen 10, welche radial ausgerichtet sind, sind die Vorsprünge 20a, 20b mittig angeordnet.

In axialer Richtung betrachtet, erstrecken sich die nockenförmigen Vorsprünge 20a, 20b nicht über den gesamten Zustellweg der Bremspads 4a, 4b, sondern ausschließlich über einen Teil dieses Zustellweges. Die axiale Erstreckung der Vorsprünge 20a, 20b ist daher insbesondere geringer, als die axiale Erstreckung der Führungsflächen 10, 11. Des weiteren läßt vor allem Fig. 2 erkennen, daß sich die nockenförmigen Vorsprünge 20a, 20b jeweils näher an der Außenseite 24 der Streben 7 befinden, als an deren Innenseite.

Korrespondierend zu dieser Lage und Ausdehnung der Vorsprünge 20a, 20b ist der jeweilige Bremspad 4a, 4b mit einer Aussparung 21 versehen. Bei dem im Wechsel von Fig. 2 auf Fig. 3 illustrierten Einsetzen des einen Bremspads 4a in die eine Ausnehmung 13 des Bremsträgers kann der an der vorderen Strebe 7 ausgebildete Vorsprung 20a in diese Aussparung 21 eintreten. Gleiches gilt für den anderen, in den Fign. 2 und 3 nicht dargestellten Bremspad 4b und den Vorsprung 20b.

Die Aussparung 21 durchzieht den jeweiligen Bremspad 4a bzw. 4b nicht auf ganzer Dicke, d. h. axialer Dicke. Vielmehr befindet sich die Aussparung 21 nur in der Belagplatte 16a des Bremspads. Der in Fig. 2 hinter dieser Belagplatte 16a angeordnete Reibbelag 16 hingegen weist die Aussparung nicht auf bzw. übernimmt diese nicht. Die alleine auf die Belagplatte 16a beschränkte Aussparung 21 reicht bereits aus, den jeweiligen Vorsprung 20a bzw. 20b aufzunehmen, und zwar auch im Falle eines Zustellweges des Bremspads von Null. Da sich bei dem Bremspad die Aussparung 21 ausschließlich über einen Teil der axialen Dicke dieses Bremspads erstreckt, muß jeder Versuch scheitern, den Bremspad um 180° um die Mittellinie 23 verdreht in die Ausnehmung 13 einzusetzen. In einem solchen Fall nämlich könnte der Vorsprung 20a nicht in die Aussparung 21 eintreten, vielmehr würde der Vorsprung 20a an den eine solche Aussparung nicht aufweisenden Reibbelag 16 des Bremspads anstoßen. Dies gilt in gleicher Weise für den einen Bremspad 4a, wie auch den anderen Bremspad 4b. Um die Zustellbewegung der Bremspads nicht zu beeinträchtigen, ist der Umriß der Aussparung 21 in dem Bremspad größer als der Umriß des Vorsprungs 20a bzw. 20b. Die Aussparung 21 ist daher stets berührungsfrei gegenüber dem Vorsprung. In Fig. 3 ist beispielhaft die in Umfangsrichtung betrachtete Breite B der Aussparung 21 eingezeichnet, welche etwas größer ist, als die ebenfalls in Umfangsrichtung betrachtete Breite b des Vorsprungs 20a.

Da sich die Vorsprünge 20a, 20b jeweils nahe der Außenseite 24 der Streben befinden, läßt sich in jede der beiden Ausnehmungen 13 wahlweise entweder der Bremspad 4a oder der Bremspad 4b (richtig) einsetzen. Beide Bremspads 4a, 4b sind daher identisch gestaltet, insbesondere auch hinsichtlich der Lage der Aussparung 21.

Diese identische Gestaltung senkt im Vergleich zu jeweils individuell kodierten Bremspads die Produktionskosten. Von Vorteil ist ferner, daß die für das axiale Gleiten der Bremspads im Bremsträger wichtigen Führungsflächen 10, 11 völlig unangetastet bleiben, und sie insbesondere von der "Verschlüsselung" der Bremsbeläge getrennt sind. Somit findet auch keine einseitige Beeinflussung der Kraftableitung in den Streben 7 bzw. an den Endstücken 6a, 6b des Bremsträgers 1 statt.

Anders als in den Fign. 2 und 3 dargestellt, kann sich umgekehrt auch der Nocken an dem Bremspad 4a, 4b und die Aussparung für den Nocken an dem Bremsträger 1 befinden. In diesem Fall ist die vorzugsweise als axiale Nut gestaltete Aussparung so lang, daß sich der Nocken darin über den gesamten Zustellweg einschließlich der verschleißbedingten Nachführung ungehindert bewegen kann.

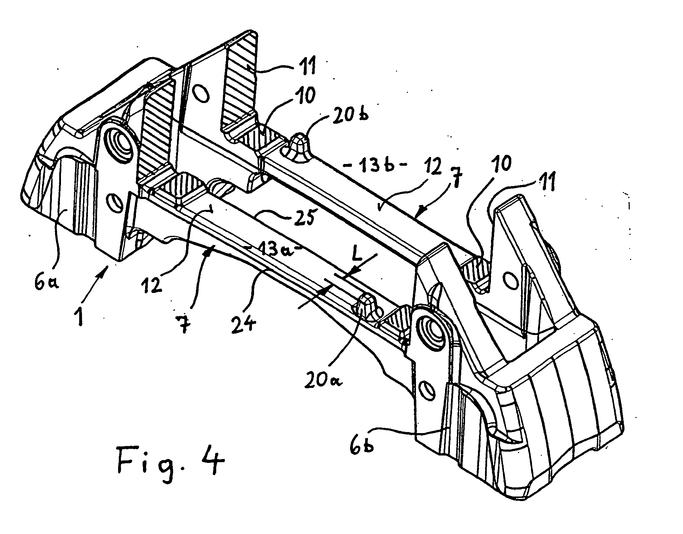

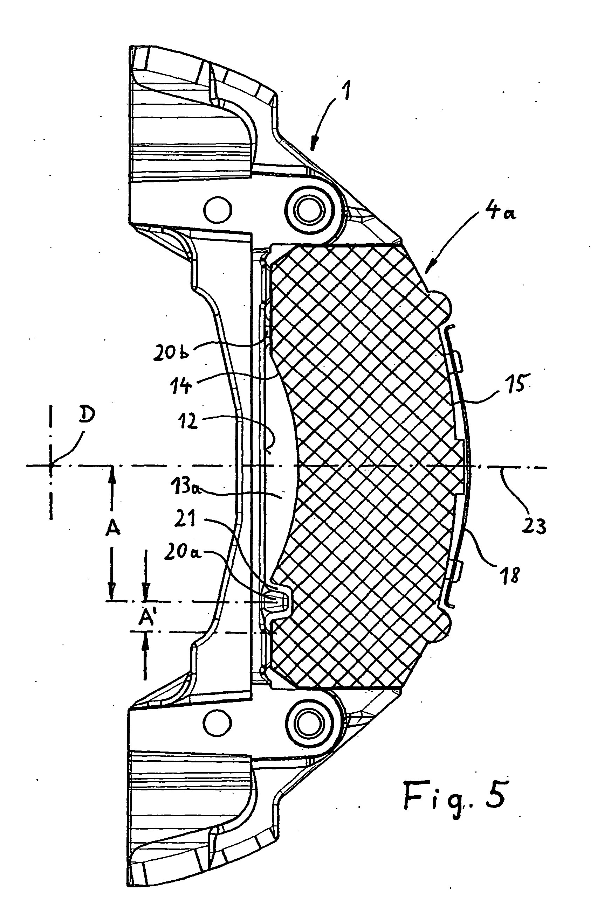

In den Fign. 4 und 5 ist, wiederum in Kombination mit Fig. 1, ein anderes Ausführungsbeispiel der Erfindung dargestellt. Funktionell gleiche Teile sind mit denselben Bezugszeichen versehen, wie in den Fign. 2 und 3. Nachfolgend werden daher nur die Unterschiede gegenüber der ersten Ausführungsform erläutert.

Die Vorsprünge 20a, 20b in Gestalt von Nocken befinden sich bei dem zweiten Ausführungsbeispiel, wie insbesondere Fig. 3 erkennen läßt, nicht in der Mitte der Bremspads, sondern außerhalb der auf die Drehrichtung der Scheibenbremse bezogenen Mitte 23. Von dieser Mitte 23 weist der nockenförmige Vorsprung 20a in Umfangsrichtung einen Abstand A auf. Auf der anderen Seite der Mitte 23 befindet sich auf derselben Strebe 7 des Bremsträgers 1 kein entsprechender Nocken, weshalb der vorhandene Nocken 20a bezogen auf die Mitte 23 der Bremspads unsymmetrisch angeordnet ist. Gleiches gilt für den Nocken 20b auf der anderen Strebe.

Dort wo am Bremsträger 1 der Vorsprung 20a, 20b ausgebildet ist, ist der zugehörige Bremspad 4a bzw. 4b mit der Aussparung 21 versehen. Auch diese ist also unsymmetrisch angeordnet. Zur Bildung der Aussparung 21 ist der jeweilige Bremspad 4a, 4b mit einer aus fertigungstechnischen Gründen durchgehenden Nut versehen, welche sich also axial sowohl durch den Reibbelag 16, wie auch durch die Belagplatte 16a des Bremspads hindurch erstreckt. Wiederum ist die Nut 21 berührungsfrei gegenüber dem Nocken 20a, 20b. Zum Zwecke der Material- und Gewichtsersparnis ist gemäß Fig. 2 die axiale Länge L des Nockens 20a, 20b geringer als die gemeinsame Dicke von Reibbelag 16 und Rückenplatte 16a. Außerdem befindet sich der Vorsprung/Nocken 20a, 20b näher am Außenrand 24, als am Innenrand 25 der jeweiligen Strebe 7. Ebenso könnte in diesem Fall ein der Breite der Strebe 7 entsprechender Nocken zum Einsatz kommen.

Aus den Fign. 2 und 3 ist ohne weiteres ersichtlich, daß sich der jeweilige Bremspad nur dann in eine der beiden Ausnehmungen 13a, 13b des Bremsträgers 1 einsetzen läßt, wenn hierbei der nockenförmige Vorsprung 20 in die korrespondierende Aussparung 21 des Bremspads eintreten kann. Wird hingegen der Bremspad irrtümlich um 180° verdreht eingesetzt, verhindert der Vorsprung 20 das sachgemäße Einsetzen. Wiederum sind Montierfehler ausgeschlossen.

Fig. 2 läßt femer erkennen, daß der Nocken 20b auf der hinteren Strebe 7 spiegelbildlich verkehrt zu dem Nocken 20a auf der vorderen Strebe 7 angeordnet ist. Ein- und derselbe (richtige) Bremsbelag läßt sich daher wahlweise entweder in der vorderen Ausnehmung 13a, oder in der hinteren Ausnehmung 13b einsetzen. Beide Bremspads sind daher identisch gestaltet, was die Produktionskosten senkt.

Um die für das axiale Gleiten der Bremspads bei der Zustellbewegung wichtigen Führungsflächen 10, 11 des Bremsträgers und 19 des Bremspads völlig unangetastet zu lassen, weist der bei dem hier beschriebenen Ausführungsbeispiel auf der Verbindungslinie der Führungsflächen 10 liegende Vorsprung 20a, 20b einen Abstand A' zu der näher gelegenen Führungsfläche 10 auf. Dies ist in Fig. 5 dargestellt. Durch diese räumliche Trennung ist jegliche Beeinträchtigung der Führungsflächen 10, 11, 19 durch die "Verschlüsselung" der Bremspads ausgeschlossen. Auch findet keine einseitige Beeinflussung der Kraftableitung statt, die Bremse arbeitet in beiden Drehrichtungen gleichermaßen und läßt sich daher z. B. wahlweise auf der linken oder auf der rechten Fahrzeugseite einsetzen.

Im Rahmen der voranstehend beschriebenen Ausführungsbeispiele befindet sich der Vorsprung 20a, 20b der Verschlüsselung jeweils an dem Bremsträger, und die korrespondierende Aussparung 21 an dem Bremspad. Im Rahmen der Erfindung ist es jedoch ebenso möglich, den Bremspad mit einem Vorsprung zu versehen, welcher in eine entsprechend gestaltete Aussparung des Bremsträgers hineinpaßt.

### Bezugszeichenliste

- 1: Bremsträger
- 2: Bremsgehäuse
- 3: Bremszuspannung
- 4a: Bremspad
- 4b: Bremspad
- 6a: Endstück des Bremsträgers
- 6b: Endstück des Bremsträgers
- 7: Strebe des Bremsträgers
- 10: Führungsfläche
- 11: Führungsfläche
- 12: Oberseite der Strebe
- 13: Ausnehmung
- 13a: Ausnehmung
- 13b: Ausnehmung
- 14: Innenrand des Bremsbelags
- 15: Außenrand des Bremsbelags
- 16: Reibbelag
- 16a: Belagplatte, Rückenplatte
- 17: Spannbügel
- 18: Feder
- 19: Führungsfläche
- 20a: Vorsprung, Nocken
- 20b: Vorsprung, Nocken
- 21: Aussparung, Nut
- 23: Mittellinie
- 24: Außenseite
- 25: Innenseite

- A: Abstand
- A': Abstand'
- B: Breite
- b: Breite
- D: Drehachse der Scheibenbremse
- L: axiale Länge

## Patentansprüche

1. Bremssattel für eine Scheibenbremse mit einem die zu beiden Seiten der Bremsscheibe der Scheibenbremse angeordneten Brempads (4a, 4b) in Ausnehmungen (13, 13a, 13b) aufnehmenden Bremsträger (1), der zur axialen Führung und/oder zur Abstützung der Bremspads (4a, 4b) in Drehrichtung mit Führungsflächen (10, 11) versehen ist, die sich über den Zustellweg der Bremspads erstrecken und an denen sich korrespondierende Führungsflächen (19) der Bremspads abstützen können, wobei die Ausnehmungen (13, 13a, 13b) des Bremsträgers (1) einerseits und die darin angeordneten Bremspads (4a, 4b) andererseits mit Strukturen in Form zueinander korrespondierender Vorsprünge und Aussparungen versehen sind,
**dadurch gekennzeichnet,**
**daß** die Führungsflächen (19) der Bremspads (4a, 4b), bezogen auf die Mitte (23) der Bremspads in Drehrichtung, symmetrisch angeordnet und gestaltet sind, und daß die zueinander korrespondierenden Vorsprünge (20a, 20b) und Aussparungen (21) sich außerhalb der Führungsflächen (10, 11; 19) von Bremsträger (1) und Bremspads (4a, 4b) befinden.

2. Bremssattel nach Anspruch 1, **dadurch gekennzeichnet, daß** sich die Vorsprünge (20a, 20b) und Aussparungen (21) im Bereich des der Drehachse (D) der Scheibenbremse zugewandten Innenrandes (14) des Bremspads (4a, 4b) befinden.

3. Bremssattel nach Anspruch 1 oder Anspruch 2, **dadurch gekennzeichnet, daß** die Aussparung (21) berührungsfrei gegenüber dem Vorsprung (20a, 20b) ist.

4. Bremssattel nach einem der vorangehenden Ansprüche, **dadurch gekennzeichnet, daß** die Ausnehmungen (13, 13a, 13b) des Bremsträgers (1) zur Aufnahme der Bremspads (4a, 4b) an den Umriß der Bremspads angepaßt sind.

5. Bremssattel nach einem der vorangehenden Ansprüche, **dadurch gekennzeichnet, daß** für jeden Bremspad (4a, 4b) der Vorsprung (20a, 20b) an der entsprechenden Ausnehmung (13, 13a, 13b) des Bremsträgers (1), und die Aussparung (21) im Umriß des Bremspads (4a, 4b) angeordnet ist.

6. Bremssattel nach Anspruch 5, **dadurch gekennzeichnet, daß** der Vorsprung (20a, 20b) ein Nocken ist, der einstückig am Bremsträger (1) angeformt in die Ausnehmung (13, 13a, 13b) vorspringt.

7. Bremssattel nach Anspruch 6, **dadurch gekennzeichnet, daß** der Vorsprung (20a, 20b) an einer Strebe (7) des Bremsträgers (1) angeformt ist.

8. Bremssattel nach einem der vorangehenden Ansprüche, **dadurch gekennzeichnet, daß** an der Ausnehmung (13, 13a, 13b) des Bremsträgers (1) ein Paar erster Führungsflächen (10) und ein Paar zweiter Führungsflächen (11) ausgebildet sind, wobei die ersten Führungsflächen (10) zueinander fluchten und im wesentlichen radial nach außen weisen, und die zweiten Führungsflächen (11) aufeinander zu gerichtet sind.

9. Bremssattel nach Anspruch 8, **dadurch gekennzeichnet, daß** die zweiten Führungsflächen (11) rechtwinklig zu den ersten Führungsflächen (10) angeordnet sind.

10. Bremssattel nach einem der Ansprüche 1 bis 9, **dadurch gekennzeichnet, daß** die Bremspads (4a, 4b) jeweils mit einer Aussparung (21) oder einem Vorsprung versehen sind, die/der sich ausschließlich über einen Teil der axialen Dicke des Bremspads (4a, 4b) erstreckt, und daß an den Ausnehmungen (13) des Bremsträgers (1) im Falle einer Aussparung (21) des Bremspads ein korrespondierender Vorsprung (20a, 20b) und im Falle eines Vorsprungs des Bremspads eine korrespondierende Aussparung ausgebildet ist, welcher Vorsprung (20a, 20b) bzw. welche Aussparung sich ausschließlich über einen Teil des Zustellweges des Bremspads (4a, 4b) erstreckt.

11. Bremssattel nach Anspruch 10, **dadurch gekennzeichnet, daß** die Aussparungen (21) und Vorsprünge (20a, 20b), bezogen auf die Drehrichtung der Scheibenbremse, in der Mitte (23) der Bremspads (4a, 4b) und in der Mitte der Ausnehmungen (13) angeordnet sind.

12. Bremssattel nach Anspruch 10 oder Anspruch 11, **dadurch gekennzeichnet, daß** sich die Aussparung (21) an dem Bremspad (4a, 4b) befindet, und daß sich der Bremspad (4a, 4b) aus einem Reibbelag (16) und einer Belagplatte (16a) zusammensetzt, wobei die Aussparung (21) ausschließlich in der Belagplatte (16a) ausgebildet ist.

13. Bremssattel nach einem der Ansprüche 1 bis 9, **dadurch gekennzeichnet, daß,** bezogen auf die Mitte (23) der Bremspads (4a, 4b) in Drehrichtung, die zueinander korrespondierenden Vorsprünge (20a, 20b) und Aussparungen (21) unsymmetrisch angeordnet sind.

14. Bremssattel nach Anspruch 13 in Verbindung mit Anspruch 8, **dadurch gekennzeichnet, daß** sich der Vorsprung (20a, 20b) und die Aussparung (21) auf der Verbindungslinie der das erste Paar bildenden ersten Führungsflächen (10) befinden.

15. Bremssattel nach Anspruch 13 oder Anspruch 14, **dadurch gekennzeichnet, daß** die Ausparung (21) eine Nut (21) im Bremspad (4a, 4b) ist.

16. Bremssattel nach Anspruch 15, **dadurch gekennzeichnet, daß** sich die Nut (21) in Fluchtung sowohl durch den Reibbelag (16) des Bremspads wie auch durch dessen Belagplatte (24) hindurch erstreckt.

17. Bremssattel nach einem der Ansprüche 13 bis 16, **dadurch gekennzeichnet, daß** die unsymmetrische Anordnung der Vorsprünge (20a, 20b) bzw. Aussparungen (21) an beiden Ausnehmungen (13a, 13b) des Bremsträgers gleich, jedoch spiegelbildlich verkehrt ist.

18. Bremspad, **gekennzeichnet durch** die Verwendung in einem Bremssattel nach einem der Ansprüche 1 bis 17.

## Claims

1. Brake caliper for a disc brake, with a brake anchor plate (1) which accommodates in recesses (13, 13a, 13b) the brake pads (4a, 4b) arranged on either side of the brake disc of the disc brake, said brake anchor plate being provided to axially guide and/or to support the brake pads (4a, 4b) in the direction of rotation by means of guide surfaces (10, 11) which extend over the feed path of the brake pads and against which corresponding guide surfaces (19) of the brake pads can be supported, wherein the recesses (13, 13a, 13b) of the brake anchor plate (1) on the one hand and the brake pads (4a, 4b) arranged therein on the other hand are provided with structures in the form of protrusions and cutouts which correspond to one another, **characterised in that** the guide surfaces (19) of the brake pads (4a, 4b), with respect to the centre (23) of the brake pads in the direction of rotation, are arranged and configured symmetrically, and **in that** the protrusions (20a, 20b) and cutouts (21) which correspond to one another are located outside the guide surfaces (10, 11; 19) of the brake anchor plate (1) and brake pads (4a, 4b).

2. Brake caliper according to claim 1, **characterised in that** the protrusions (20a, 20b) and cutouts (21) are located in the region of the inner edge (14) of the brake pad (4a, 4b) facing towards the axis of rotation (D) of the disc brake.

3. Brake caliper according to claim 1 or claim 2, **characterised in that** the cutout (21) does not make contact with the protrusion (20a, 20b).

4. Brake caliper according to one of the preceding claims, **characterised in that** the recesses (13, 13a, 13b) of the brake anchor plate (1) for accommodating the brake pads (4a, 4b) are adapted to the contour of the brake pads.

5. Brake caliper according to one of the preceding claims, **characterised in that**, for each brake pad (4a, 4b), the protrusion (20a, 20b) is arranged on the corresponding recess (13, 13a, 13b) of the brake anchor plate (1) and the cutout (21) is arranged in the contour of the brake pad (4a, 4b).

6. Brake caliper according to claim 5, **characterised in that** the protrusion (20a, 20b) is a cam which is integrally formed in one piece on the brake anchor plate (1) and protrudes into the recess (13, 13a, 13b).

7. Brake caliper according to claim 6, **characterised in that** the protrusion (20a, 20b) is integrally formed on a strut (7) of the brake anchor plate (1).

8. Brake caliper according to one of the preceding claims, **characterised in that** a pair of first guide surfaces (10) and a pair of second guide surfaces (11) are formed on the recess (13, 13a, 13b) of the brake anchor plate (1), wherein the first guide surfaces (10) are flush with one another and point essentially radially outwards and the second guide surfaces (11) are oriented towards one another.

9. Brake caliper according to claim 8, **characterised in that** the second guide surfaces (11) are arranged at right angles to the first guide surfaces (10).

10. Brake caliper according to one of claims 1 to 9, **characterised in that** the brake pads (4a, 4b) are in each case provided with a cutout (21) or a protrusion, which cutout or protrusion extends only over part of the axial thickness of the brake pad (4a, 4b), and **in that** in the case of a cutout (21) on the brake pad a corresponding protrusion (20a, 20b) is formed on the recesses (13) of the brake anchor plate (1) and in the case of a protrusion on the brake pad a corresponding cutout is formed on the recesses of the brake anchor plate, which protrusion (20a, 20b) or which cutout extends only over part of the feed path of the brake pad (4a, 4b).

11. Brake caliper according to claim 10, **characterised in that** the cutouts (21) and protrusions (20a, 20b), with respect to the direction of rotation of the disc brake, are arranged in the centre (23) of the brake pads (4a, 4b) and in the centre of the recesses (13).

12. Brake caliper according to claim 10 or claim 11, **characterised in that** the cutout (21) is located on the brake pad (4a, 4b), and **in that** the brake pad (4a, 4b) is composed of a friction lining (16) and a lining plate (16a), wherein the cutout (21) is formed only in the lining plate (16a).

13. Brake caliper according to one of claims 1 to 9, **characterised in that**, with respect to the centre (23) of the brake pads (4a, 4b) in the direction of rotation, the protrusions (20a, 20b) and the cutouts (21) which correspond to one another are arranged non-symmetrically.

14. Brake caliper according to claim 13 in conjunction with claim 8, **characterised in that** the protrusion (20a, 20b) and the cutout (21) are located on the connecting line of the first guide surfaces (10) forming the first pair.

15. Brake caliper according to claim 13 or claim 14, **characterised in that** the cutout (21) is a groove (21) in the brake pad (4a, 4b).

16. Brake caliper according to claim 15, **characterised in that** the groove (21) extends in alignment both through the friction lining (16) of the brake pad and through the lining plate (24) thereof.

17. Brake caliper according to one of claims 13 to 16, **characterised in that** the non-symmetrical arrangement of the protrusions (20a, 20b) or cutouts (21) on the two recesses (13a, 13b) of the brake anchor plate is the same, but reversed in the form of a mirror image.

18. Brake pad, **characterised by** use in a brake caliper according to one of claims 1 to 17.

## Revendications

1. Etrier pour un frein à disque comprenant un support de frein (1) recevant dans des évidements (13, 13a, 13b) les patins de frein (4a, 4b) disposés des deux côtés du disque du frein et pourvu de surfaces de guidage (10, 11) pour le coulissement axial et/ou pour l'appui des patins de frein (4a, 4b) dans le sens de rotation, qui s'étendent sur la course d'avance des patins de frein et contre lesquelles des surfaces de guidage (19) correspondantes des patins de frein peuvent s'appuyer, les évidements (13, 13a, 13b) du support de frein (1), d'une part, et les patins de frein (4a, 4b) qui y sont logés, d'autre part, étant munis de structure ayant la forme de saillies et de cavités correspondant entre elles,
**caractérisé en ce que**
les surfaces de guidage (19) des patins de frein (4a, 4b) sont disposées et conformées symétriquement dans le sens de rotation par rapport au milieu (23) des patins de frein, et **en ce que** les saillies (20a, 20b) et les cavités (21) correspondant entre elles se trouvent à l'extérieur des surfaces de guidage (10, 11 ; 19) du support de frein (1) et des patins de frein (4a, 4b).

2. Etrier de frein selon la revendication 1, **caractérisé en ce que** les saillies (20a, 20b) et les cavités (21) se trouvent au niveau du bord intérieur (14) du patin de frein (4a, 4b) dirigé vers l'axe de rotation (D) du frein à disque.

3. Etrier de frein selon la revendication 1 ou la revendication 2, **caractérisé en ce que** la cavité (21) est exempte de contact avec la saillie (20a, 20b).

4. Etrier de frein selon l'une des revendications précédentes, **caractérisé en ce que** les évidements (13, 13a, 13b) du support de frein (1) sont ajustés au contour des patins de frein (4a, 4b) pour la réception de ceux-ci.

5. Etrier de frein selon l'une des revendications précédentes, **caractérisé en ce que**, pour chaque patin de frein (4a, 4b), la saillie (20a, 20b) est disposée sur l'évidement (13, 13a, 13b) correspondant du support de frein (1), et la cavité (21) dans le contour du patin de frein (4a, 4b).

6. Etrier de frein selon la revendication 5, **caractérisé en ce que** la saillie (20a, 20b) est une came formée d'un seul tenant sur le support de frein (1) et faisant saillie dans l'évidement (13, 13a, 13b).

7. Etrier de frein selon la revendication 6, **caractérisé en ce que** la saillie (20a, 20b) est formée contre une entretoise (7) du support de frein (1).

8. Etrier de frein selon l'une des revendications précédentes, **caractérisé en ce qu'**une paire de premières surfaces de guidage (10) et une paire de deuxièmes surfaces de guidage (11) sont formées sur l'évidement (13, 13a, 13b) du support de frein (1), les premières surfaces de guidage (10) étant alignées l'une sur l'autre et sensiblement dirigées radialement vers l'extérieur, et les deuxièmes surfaces de guidage (11) étant opposées l'une à l'autre.

9. Etrier de frein selon la revendication 8, **caractérisé en ce que** les deuxièmes surfaces de guidage (11) sont disposées à angle droit par rapport aux premières surfaces de guidage (10).

10. Etrier de frein selon l'une des revendications 1 à 9, **caractérisé en ce que** les patins de frein (4a, 4b) sont pourvus chacun d'une cavité (21) ou d'une saillie, laquelle ne s'étend que sur une partie de l'épaisseur axiale du patin de frein (4a, 4b), et **en ce que**, dans le cas d'une cavité (21) du patin de frein, une saillie (20a, 20b) correspondante est formée sur les évidements (13) du support de frein (1), et une cavité correspondante dans le cas d'une saillie du patin de frein, ladite saillie (20a, 20b) ou ladite cavité ne s'étendant que sur une partie de la course d'avance du patin de frein (4a, 4b).

11. Etrier de frein selon la revendication 10, **caractérisé en ce que** les cavités (21) et les saillies (20a, 20b) sont disposées au milieu (23) des patins de frein (4a, 4b) et au milieu des évidements (13), par rapport au sens de rotation du frein à disque.

12. Etrier de frein selon la revendication 10 ou la revendication 11, **caractérisé en ce que** la cavité (21) se trouve sur le patin de frein (4a, 4b), et **en ce que** le patin de frein (4a, 4b) se compose d'une garniture de friction (16) et d'une plaque de garniture (16a), la cavité (21) étant exclusivement formée dans la plaque de garniture (16a).

13. Etrier de frein selon l'une des revendications 1 à 9, **caractérisé en ce que** les saillies (20a, 20b) et les cavités (21) correspondant entre elles sont asymétriquement disposées dans le sens de rotation par rapport au milieu (23) des patins de frein (4a, 4b).

14. Etrier de frein selon la revendication 13, associée à la revendication 8, **caractérisé en ce que** la saillie (20a, 20b) et la cavité (21) se trouvent sur la ligne de jonction des premières surfaces de guidage (10) formant la première paire.

15. Etrier ce frein selon la revendication 13 ou la revendication 14, **caractérisé en ce que** la cavité (21) est une encoche (21) dans le patin de frein (4a, 4b).

16. Etrier de frein selon la revendication 15, **caractérisé en ce que** l'encoche (21) s'étend en alignement dans la garniture de friction (16) du patin de frein ainsi que dans la plaque de garniture (24) de ce dernier.

17. Etrier de frein selon l'une des revendications 13 à 16, **caractérisé en ce que** la disposition asymétrique des saillies (20a, 20b) ou des cavités (21) est identique sur les deux évidements (13a, 13b) du support de frein, quoique inversée.

18. Patin de frein, **caractérisé par** son utilisation dans un étrier de frein selon l'une des revendications 1 à 17.
